# EUROPÄISCHE PATENTSCHRIFT

(11) **EP 2 147 959 B1**
(45) Veröffentlichungstag und Bekanntmachung des Hinweises auf die Patenterteilung: **06.04.2016**
(21) Anmeldenummer: 09165904.5
(22) Anmeldetag: 20.07.2009
(51) Int. Cl.: C09J 7/04

(54) **PAPIERKLEBEBAND**
PAPER ADHESIVE BAND
BANDE ADHÉSIVE EN PAPIER

(30) Priorität: 23.07.2008 DE 102008034371
(43) Veröffentlichungstag der Anmeldung: 27.01.2010
(73) Patentinhaber: tesa SE, 22848 Norderstedt (DE)
(72) Erfinder: Sperling, Caroline, 20255, Hamburg (DE); Krawinkel, Thorsten, 22457, Hamburg (DE); Meier, Andreas Dr., Grand Rapids, MI 49506 (US)

(56) Entgegenhaltungen:
- EP-A- 1 418 215
- EP-A- 1 466 952
- US-A- 5 998 018
- US-A1- 2008 023 136

## Beschreibung

Die Erfindung betrifft ein Papierklebeband mit einer Klebemasse auf der Basis von Vinylaromatenblockcopolymeren, das für einen längeren Zeitraum gegen UV-Licht stabil und witterungsbeständig ist und im Außenbereich eingesetzt werden kann.

Selbstklebende Abdeckbänder mit Papierträgern, auch als Abdeckklebeband bezeichnet, müssen einige wesentliche Eigenschaften aufweisen, damit sie die besonderen an sie gestellten Anforderungen erfüllen. Dies sind - ohne dass diese Aufstellung den Anspruch auf Vollständigkeit erhebt - eine geringe Dicke, eine hohe Zugfestigkeit (Höchstzugkraft), eine gute Dehnbarkeit (Reißdehnung), eine ausreichende aber nicht zu hohe Klebkraft, die rückstandsfreie Wiederablösbarkeit nach den Beanspruchungen der eigentlichen Anwendung, die gute Haftung von Anstrichstoffen auf der Rückseite, die Beständigkeit gegenüber Farbdurchschlag, die Beständigkeit gegenüber Feuchtigkeit und eine dosierte Klebkraft auf der eigenen Rückseite.
Während einige der Eigenschaften auf die Klebmasse oder andere Funktionsschichten des Abdeckklebebands zurückzuführen sind, so basieren die Dehnbarkeit und die Zugfestigkeit wesentlich auf den physikalischen Eigenschaften des verwendeten Trägermaterials.

Deshalb werden für Abdeckklebebänder bevorzugt Papierträger und dann solche eingesetzt, die durch die Art des verwendeten Zellstoffes, durch den Mahlgrad und durch bestimmte chemische Hilfsmittel eine definierte Zugfestigkeit und durch besondere Verfahrensschritte wie der Kreppung oder das Clupak-Verfahren mit einer definierten Dehnbarkeit ausgestattet sind.

Diese Rohstoffe und Verfahrensschritte sind ausschließlich der Kunst des Papiermachers überlassen und stehen dem Hersteller von Abdeckklebebändern daher nicht zur Verfügung, da dieser im Regelfall das Rohpapier als Basis des Abdeckklebebands zukauft.

Insbesondere die Dehnbarkeit ist aber eine unverzichtbare Eigenschaft von Abdeckklebebändern. Denn sie ermöglicht erst die vollflächige und faltenfreie Verklebung in Kurven und auf sphärischen Oberflächen, wie sie zum Beispiel bei der Reparaturlackierung von Pkws notwendig ist; das Abdeckklebeband kann bei der Handapplikation weichen Konturen perfekt nachgeführt werden und führt so zu einer sauberen, unterläuferfreien Farbkante. Die dafür erforderliche Dehnung in Längsrichtung liegt bei so genannten Flachkrepps im Bereich von 10 %, bei so genannten Hochkrepps um 50 %. Zugfestigkeit und Dehnung sind so aufeinander abgestimmt, dass es problemlos gelingt, während der manuellen Applikation an der Außenkurve des Abdeckklebebands einen Teil der Dehnung ohne Rissgefahr herauszuziehen und dadurch eine Kurve zu erzeugen.

Im Folgenden soll auf die nach dem Stand der Technik üblichen Prozesse zur Herstellung von dehnfähigen bahnförmigen Papierträgern eingegangen werden.

Für Abdeckklebebänder werden üblicherweise als Trägermaterial maschinell gekreppte Papiere eingesetzt, die in der Regel aus 100 % Natronkraft-Zellstoff (NBSK) hergestellt werden. Im so genannten Nasskrepp-Verfahren erfolgt die Kreppung meistens in der Papiermaschine mit Hilfe eines Kreppschabers auf einem so genannten Kreppzylinder entweder innerhalb beziehungsweise am Ende der Pressenpartie oder auf einem der darauf folgenden Zylinder der Trockenpartie. Dabei wird durch Stauchung der noch feuchten und labilen Papierbahn an der Vorderkante des Kreppschabers eine Mikrofaltung des Papiers erzeugt. Dieser sehr sensible Verfahrensschritt begrenzt im Allgemeinen die maximal mögliche Geschwindigkeit der Papiermaschine und verkürzt die Länge der Papierbahn um ca. 10 bis 20 %. Die Falten werden beim anschließenden Trocknungsprozess im Wesentlichen durch Ausbildung von Wasserstoffbrückenbindungen fixiert, so dass sie bei mäßiger mechanischer Beanspruchung des Papiers in Längsrichtung - wie sie zum Beispiel beim Abrollen und Ablängen eines Abdeckklebebands auftritt - stabil bleiben. Die Stabilität kann durch Zugabe von Leimungsmitteln noch erhöht und so dem jeweiligen Anwendungszweck angepasst werden. Sie wird üblicherweise durch Messen des Kraft-Dehnungs-Diagramms bestimmt. Nach diesem Verfahren lassen sich so genannte Flachkrepps mit Reißdehnungswerten in Längsrichtung von bis zu 20 % erzeugen. Die Dehnung in Querrichtung beträgt im Allgemeinen nicht mehr als ca. 5 %.

Ein weiteres Verfahren zur Herstellung von dehnbaren Papierträgern für Abdeckklebebänder ist das so genannte Clupak-Verfahren. Dabei werden die Fasern im glatten Papier durch Friktion mit Hilfe eines sich entspannenden Gummituches oder gummibezogener Walzen in der Papierbahnebene gestaucht beziehungsweise gekräuselt. Man erhält so ein dehnfähiges Papier, dessen gekräuselte Fasern bei Zugbeanspruchung wieder gestreckt werden. Eine Mikrofaltung wie oben beschrieben ist nicht erkennbar; das Papier erscheint glatt und ist deshalb nicht als Krepp-Papier im eigentlichen Sinne anzusehen. Charakteristisch für die nach diesem Verfahren hergestellten Papiere ist eine bereits bei geringen Dehnungen sehr hohe Zugkraft, die im Bereich der Reißdehnung nur noch geringfügig ansteigt. Eine Anschmiegsamkeit von aus solchen Papieren hergestellten Abdeckklebebands an sphärische Oberflächen ist bei manueller Applikation deshalb kaum gegeben. Außerdem wird das Papier bedingt durch das Verfahren in z-Richtung stark verdichtet und nimmt deshalb während der in der Abdeckklebeband-Herstellung üblichen Imprägnierung nur schlecht Dispersionen auf. Üblicherweise werden deshalb für Abdeckklebebänder geleimte Clupak-Träger ohne Imprägnierung eingesetzt. Die erzielten Dehnungen in Längsrichtung liegen ebenfalls bei bis zu 20 %. Zu diesem Verfahren und dem daraus hergestellten Produkt sei auf die DE 38 35 507 A1 verwiesen.

Für die Erzielung sehr hoher Dehnwerte von bis zu etwa 50 % wird neben dem klassischen Nasskreppverfahren, das hierzu mit besonders groben Kreppschabern betrieben wird, auch das Trockenkreppverfahren angewendet. Dabei wird ein glattes Papier auf einer separaten Maschine nach Wiederanfeuchten mit einer Bindemittellösung (Stärke, CMC, PVAI) wie oben beschrieben gekreppt und anschließend erneut getrocknet. Auf beide Weisen erhält man so genannte Hochkrepps, die sich neben der extremen Dehnfähigkeit durch eine große Dicke und eine sehr raue Oberfläche auszeichnen.

Diese bahnförmigen Papierträger bestimmen durch ihre Eigenschaften nicht nur die späteren Anwendungseigenschaften des Abdeckklebebands maßgeblich, sondern diese Eigenschaften sind auch kennzeichnend für und teilweise einschränkend bei der Herstellung derselben.

Im Vergleich zu herkömmlichen Klebemassen auf Basis von Acrylaten, die ebenfalls sehr alterungsbeständig und gegen UV-Licht stabil sind, verhalten sich die SBBS-Klebemassen in ihrer Reversibilität deutlich vorteilhafter, ähnlich wie Klebemassen auf Basis von Naturkautschuk oder synthetischen Kautschuken wie SIS. Letztere weisen jedoch keine besonders gute Alterungs- oder UV-Licht-Stabilität auf, weswegen sie im Außenbereich gar nicht oder zeitlich nur stark begrenzt eingesetzt werden können.

Als Reversibilität wird im Rahmen dieser Offenbarung die Abzugskraft bezeichnet, die sich nach unterschiedlichen Zeiträumen und auf unterschiedlichen Untergründen einstellt. Die Abzugkraft wird dabei immer mit der Kraft verglichen, die sich aus der Klebkraftmessung auf einer Stahlplatte ergibt, deren Oberfläche nach der Prüfvorschrift für Klebkraftmessungen (gemäß AFERA 5001) definiert behandelt ist. Je größer die Differenz zwischen der Abzugskraft nach einem bestimmten Zeitintervall und der anfänglichen Klebkraft, umso schlechter ist die Reversibilität der Klebemasse. Bei einer ungenügenden Reversibilität, das heißt hohen Abzugskraft, kann beim Abziehen des Klebebandes entweder der Träger reißen, die Klebemasse kohäsiv spalten oder sich durch adhäsives Versagen vom Träger lösen.
Aufgrund der vergleichsweise schlechten Reversibilität von Acrylat-Klebemassen werden als Trägermaterialien bevorzugt reißfeste oder stabile Träger aus Gewebe oder Folien eingesetzt, die ein reißer- und rückstandsfreies Abziehen gewährleisten.
Imprägnierte Papiere, wie sie standardmäßig als Abdeckklebebänder für Maler und Lackierarbeiten eingesetzt werden, werden - je nach Papiergewicht und Papierfasertyp - bei Abzugkräften zwischen 5 und 10 N/cm bei einem beschleunigten Abziehen reißen (die Methode "Prüfung der Reißer durch beschleunigtes Abziehen" wird später unter den Prüfmethoden beschrieben). Hinzu kommt, dass die Träger in einer Außenanwendung durchaus feucht werden können. Die Festigkeit eines feuchten imprägnierten Papierträgers ist deutlich (um 50 %) niedriger, weswegen ein feuchter Papierträger bereits bei niedrigerer Abzugsgeschwindigkeit reißt. Aufgrund ihrer schlechten Reversibilität, besonders auf rauen beziehungsweise mikroskopisch rauen Oberflächen, können Acrylatmassen sehr leicht um einen Faktor 2 bis 2,5 ihrer Anfangsklebkraft aufziehen (die Herstellung derartiger mikroskopisch rauer Oberflächen wird später unter den Prüfmethoden beschrieben). Damit sich Papierträger mit einer Acrylatmasse auch bei feuchten Witterungsbedingungen rückstands- und reißerfrei entfernen lassen, muss die anfängliche Klebkraft kleiner als 2 N/cm gewählt werden. Eine Klebkraft kleiner 2 N/cm ist jedoch für Anwendungen im Außenbereich, bei denen oft auch auf staubigen oder rauen Untergründen verklebt wird, zu gering, als dass Masken von den Klebebändern über einen kurzen oder längeren Zeitraum sicher gehalten werden und sich nicht lösen.

An dieser Stelle fehlt dem Anwender ein Papierklebeband, das auch auf rauen und staubigen Untergründen mit einer vergleichsweise hohen Klebkraft zwischen 3 und 4 N/cm sicher klebt, dennoch aber über einen langen Zeitraum witterungs- und UV-stabil ist.

Aufgabe der Erfindung ist es, gegenüber dem Stand der Technik eine merkliche Verbesserung zu erzielen und ein Klebeband zur Verfügung zu stellen, welches die genannten Anforderungen erfüllt, das eine ausreichend hohe Klebkraft aufweist, das witterungs- und UV-stabil ist und das reversibel ist.

Gelöst wird diese Aufgabe durch ein Klebeband, wie es im Hauptanspruch näher gekennzeichnet ist. In den Unteransprüchen sind vorteilhafte Ausführungsformen der Erfindung beschrieben. Des Weiteren ist die Verwendung des erfindungsgemäßen Klebebands umfasst.

Demgemäß betrifft die Erfindung ein Klebeband mit einem Träger aus einem Papier, auf den zumindest einseitig eine Klebemasse aufgebracht ist, wobei die Klebemasse besteht aus
- mindestens einem Blockcopolymer P1 mit einem oder mehreren endständigen Blöcken bestehend aus Vinylaromaten und mindestens einem Block bestehend aus konjugierten Dienen, bei dem die endständigen Doppelbindungen, entstanden durch 1,2-Verknüpfung, zu mehr als 80 % hydriert sind, während die Doppelbindungen in der Hauptkette, entstanden durch 1,4-Verknüpfung, zu weniger als 30 % hydriert sind, und
- mindestens einem Blockcopolymer P2 mit einem oder mehreren endständigen Blöcken bestehend aus Vinylaromaten und mindestens einem Block bestehend aus konjugierten Dienen, bei dem mindestens 95 % der Doppelbindungen hydriert sind.

Als Papierträger für das Klebeband können alle nach den oben beschriebenen Verfahren gewonnenen, unbehandelten Papiere eingesetzt werden.
Vorteilhaft besitzen die Papiere eine Reißdehnung zwischen 4 % und 60%, in einer besonders vorteilhaften Ausführungsform aber zwischen 6 % und 16 %. Bestimmt wird die Reißdehnung in Anlehnung an die AFERA Prüfmethode 5004. Vorteilhaft besitzen die Papiere ein Flächengewicht zwischen 30 g/m² und 80 g/m², einer besonders vorteilhaften Ausführungsform aber zwischen 35 g/m² und 55 g/m².
Zur Erhöhung der Festigkeit, speziell unter feuchten Bedingungen, werden die Papiere vor der weiteren Verarbeitung zum Klebeband mit einer Imprägnierung ausgerüstet. Dafür können handelsübliche Imprägniermittel eingesetzt werden wie zum Beispiel wässrige Dispersionen eines carboxylgruppenhaltigen Acrylsäureestercopolymerisats oder eines carboxylgruppenhaltigen Styrol-Butadien- Copolymerisates. Das Flächengewicht des Imprägniermitteleintrags (trocken) kann zwischen 6 g/m² und 40 g/m² betragen, vorteilhaft aber zwischen 10 g/m² und 30 g/m².

In einer vorteilhaften Ausführungsform der Klebemasse weisen die Blockcopolymere einen Polyvinylaromatenanteil von 10 Gew.-% bis 35 Gew.-% auf.

In einer weiteren vorteilhaften Ausführungsform beträgt der Anteil der beiden Vinylaromatenblockcopolymere in Summe bezogen auf die gesamte Klebmasse 20 bis 70 Gew.-%, bevorzugt 30 bis 60 Gew.-%, ganz besonders bevorzugt 35 bis 55 Gew.-%.

Bei der Herstellung von Blockcopolymeren auf der Basis von Vinylaromaten, bevorzugt Styrol und 1,3-Dienen, besonders Isopren und Butadien, werden im Dienblock die Diene sowohl 1,2- als auch 1,4-verknüpft eingebaut. Der Anteil an 1,2-verknüpften Dienen kann durch das Lösungsmittel, die Temperatur oder den Katalysator gesteuert werden. Da die 1,2-vernüpften Diene eine endständige Doppelbindung enthalten, während die Doppelbindung bei den 1,4-verknüpften Dienen in der Hauptkette liegt, ist eine selektive Hydrierung der endständigen und damit reaktiveren Doppelbindungen möglich.

Als Blockcopolymere kommen solche Polymere zum Einsatz, die zum einen Blöcke aus Vinylaromaten (A-Blöcke) wie zum Beispiel Styrol und zum anderen solche gebildet durch Polymerisation von 1,3-Dienen (B-Blöcke) wie zum Beispiel Butadien und Isopren oder einer Mischung aus beiden besitzen. Dabei sind die B-Blöcke so polymerisiert, dass sie einen hohen Anteil an Vinylgruppen durch eine 1,2-Verknüpfung von über 20 % besitzen, die im Gegensatz zu den Doppelbindungen in der Hauptkette hydriert sind. Wenn das nichthydrierte Blockcopolymer ein SBS ist, entsteht nach der selektiven Hydrierung ein so genanntes SBBS (Styrol-Butadien/Butylen-Styrol). Da die Selektivität der Hydrierung nicht 100 % ist, können Blockcopolymere zum Einsatz kommen, dessen vinylische Doppelbindungen, entstanden durch 1,2-Verknüpfung, zu mehr als 80 % hydriert sind, während die Doppelbindungen in der Hauptkette nur zu maximal 30 % hydriert sind.

Als zweite Komponente kommen Blockcopolymere zum Einsatz, die zum einen Blöcke aus Vinylaromaten (A-Blöcke) wie zum Beispiel Styrol und zum anderen solche gebildet durch Polymerisation von 1,3-Dienen (B-Blöcke) wie zum Beispiel Butadien und Isopren oder einer Mischung aus beiden besitzen, wobei die gesamten Doppelbindungen der B-Blöcke zu einem Anteil von über 95 % hydriert sind.
Die Blockcopolymere können lineare A-B-A-Struktur aufweisen. Einsetzbar sind ebenfalls Blockcopolymere von radialer Gestalt sowie sternförmige und lineare Multiblockcopolymere. Als weitere Komponente können A-B-Zweiblockcopolymere eingesetzt werden.

Anstelle der bevorzugten Polystyrolblöcke können auch Polymerblöcke auf Basis anderer aromatenhaltiger Homo- und Copolymere (bevorzugt C₈- bis C₁₂-Aromaten) mit Glasübergangstemperaturen von größer ca. 75 °C genutzt werden wie zum Beispiel α-methylstyrolhaltige Aromatenblöcke.

Die beiden Elastomere, zum einen teilhydriert P1 und zum anderen zu mindestens 95 % hydriert P2, liegen erfindungsgemäß in einem Verhältnis (Gewichtsanteile) von 25:75 bis zu einem Verhältnis von 90:10 vor, bevorzugt im Bereich von 40:60 und 80:20.

Als Klebrigmacher dienen Klebharze, die mit dem Elastomerblock der Vinylaromatenblockcopolymere verträglich sind. Geeignete Klebharze sind unter anderem vorzugsweise nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen, oder Polyterpenharze auf Basis von α-Pinen und/oder ß-Pinen und/oder δ-Limonen. Vorgenannte Klebharze können sowohl allein als auch im Gemisch eingesetzt werden.

Dabei können sowohl bei Raumtemperatur feste als auch flüssige Harze zum Einsatz kommen.
Um eine hohe Alterungs- und UV-Stabilität zu gewährleisten, sind hydrierte Harze bevorzugt.

Als weitere Additive können typischerweise genutzt werden:
- Plastifizierungsmittel wie zum Beispiel Weichmacheröle oder niedermolekulare flüssige Polymere wie zum Beispiel niedermolekulare Polybutene
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Füllstoffe wie Fasern, Ruß, Zinkoxid, Titandioxid, Mikrovollkugeln, Voll- oder Hohlglaskugeln, Kieselsäure, Silikaten, Kreide
- Verarbeitungshilfsmittel
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine, um nur einige wenige zu nennen.

Erfindungsgemäß ist es auch, wenn die Klebemasse alle die genannten Zuschlagstoffe jeweils nicht aufweist.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

### Herstellung der Haftklebemassen

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

Die so hergestellten Haftklebmassen können dann mit den allgemein bekannten Verfahren auf den Träger gebracht werden. Bei Verarbeitung aus der Schmelze können dies Auftragsverfahren über eine Düse oder einen Kalander sein.
Bei Verfahren aus der Lösung sind Beschichtungen mit Rakeln, Messern oder Düsen bekannt, um nur einige wenige zu nennen.

### Prüfmethoden

### Klebkraft

Die Bestimmung der Klebkraft (gemäß AFERA 5001) wurde wie folgt durchgeführt. Als definierter Haftgrund wurden eine Stahlfläche und Untergründe mit mikroskopisch rauer Oberfläche (siehe "Herstellung mikroskopisch rauer Oberflächen"), eingesetzt. Das zu untersuchende verklebbare Flächenelement wurde auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wurde das verklebbare Flächenelement in einem Winkel von 180° vom Haftgrund mit einem Zugprüfungsgerät (Firma Zwick) abgezogen und die hierfür bei Raumtemperatur benötigte Kraft gemessen. Der Messwert (in N/cm) ergab sich als Mittelwert aus drei Einzelmessungen.

### Bewitterungstest

Als Schnelltest anstelle der langwierigen Freibewitterung wurde der so genannte "Suntest" in Anlehnung an die ISO 4892-2 (2006) durchgeführt. Dazu wurden Muster auf Hart-PVC, Glas und eloxierten Aluminiumplatten verklebt und einer Kombination von UV-Bestrahlung mittels einer 765 Watt Xenonlampe und temporärer Bewässerung unterworfen. In den zweistündigen Zyklen folgten nach 18 min Kombination Bewässerung und Bestrahlung 102 min Bestrahlung ohne Bewässerung.
Nach der Bewitterungszeit wurden die Streifen nach Rekonditionierung auf Raumtemperatur visuell beurteilt, anschließend unter 90° und 180° abgezogen und hinsichtlich Reißern und Rückständen beurteilt. Nach Herstellerangaben (zum Beispiel Firma Atlas) entspricht eine Woche Suntester ca. 3 Monaten Freibewitterung in Mitteleuropa.
Sporadisch durchgeführte Dauertests unter realen Außenbedingungen (Freibewitterung) erfolgten in Hamburg auf denselben Haftgründen auf einem Gebäudedach mit Südausrichtung unter einem Neigungswinkel von 45°. Die Ergebnisse waren vergleichbar zu den oben genannten Schnelltesten.

### Prüfung der Reißer durch beschleunigtes Abziehen

Zur Messung der Kraft, bei der die Papierklebebänder unter beschleunigtem Abziehen reißen, werden die Streifen wie für eine Klebkraftmessung (AFERA 5001) auf den ausgewählten Untergründen aufgeklebt und anschließend für 1 Stunde bei 60 °C getempert.
Die Streifen werden jeweils nach 10, 20 und 30 min nach der Entnahme aus dem Ofen beschleunigt abgezogen. Dafür wird ein Ende des Klebbandstreifens mit einem Nylonband versehen, das am anderen Ende über eine Umlenkrolle an eine Kraft-ZugMaschine angehängt ist.
Für das beschleunigte Abziehen wird die Probe mit dem Papierklebeband auf einem beweglichen Schlitten befestigt und der Schlitten über einen Linear-Motor entgegen der Abzugsrichtung mit 0,5 m/s² beschleunigt. Während des Beschleunigungsvorgangs wird die Kraft gemessen. Die maximale Kraft, bei der der Papierträger reißt ist die gesuchte Messgröße. Von den generierten Messwerten wird das arithmetische Mittel angegeben.

### Herstellung mikroskopisch rauer Oberflächen

Zur Herstellung mikroskopisch rauer Untergründe wird die Oberfläche mit Schleifpapier der Körnung 600 aufgeraut. Dafür wird das Schleifpapier jeweils circa 15 mal auf der Oberfläche in x und y Richtung geführt, so dass die Schleifspuren senkrecht zu einander stehen. Die Reinigung der Oberfläche erfolgt mit einem Ethanol getränkten Tuch.
Mit dieser Methode lassen sich mikroskopisch raue Untergründe von Aluminiumblechen, lackierten Aluminiumblechen (Automobillacke) und Hart-PVC-Platten herstellen.
Damit die Klebemasse schnell und gut auf den mikroskopisch rauen Untergründen aufziehen können, werden die mit dem Papierklebeband beklebten Platten vier Tage lang bei 60 °C und einer relativen Luftfeuchte von 90 % im Klimaschrank gelagert. Nach der Klimalagerung werden die Platten mindestens 8 Stunden im Normalklima konditioniert, bevor mit den Mustern weitere Prüfungen durchgeführt werden.

Im Folgenden wird die Erfindung durch einige Beispiele näher erläutert, ohne die Erfindung damit einschränken zu wollen.

### Beispiele

Dazu wird ein schwach gekreppter Papierträger verwendet, der ein Flächengewicht von 40 g/m² aufweist und mit einer Imprägnierung auf Basis eines handelsüblichen carboxylgruppenhaltigen Styrol-Butadien-Copolymerisates mit einem Eintragsgewicht von 18 g/m² ausgerüstet ist. Die der Klebemasse abgewandte Trägerseite ist mit einem Trennlack für Klebmassen auf Basis von Naturkautschuk beschichtet. Die gegenüberliegende Trägerseite ist zur Verbesserung der Haftung zur Klebemasse mit einem Haftvermittler auf Basis eines gepfropften Styrol-Butadien Kautschuks beschichtet. Nach den Ergebnissen der Reißdehnungsmessungen weist der Träger eine Höchstzugkraft von 55 N/15 mm mit einer Reißdehnung von 10 % auf.

Der ausgerüstete Papierträger wurde mit einer SBBS-Masse der folgenden Rezeptur auf drei unterschiedlichen Wegen beschichtet.

| | | |
|---|---|---|
| 70 Teile | Tuftec P 1500 | SBBS mit 30 Gew.-% Blockpolystyrolgehalt und ca. 68 Gew.-% Zweiblockgehalt der Firma Asahi |
| 30 Teile | Kraton G 1657 | SEBS mit 13 Gew.-% Blockpolystyrolgehalt und ca. 36 Gew.-% Zweiblockgehalt der Firma Kraton |
| 100 Teile | Escorez 5600 | Hydriertes KW-Harz mit einem Erweichungspunkt von 100 °C der Firma Exxon |
| 25 Teile | Ondina G 17 | Weißöl aus paraphinischen und naphtenischen Anteilen der Firma Shell |

SBBS 01 - Die in Lösung hergestellte SBBS-Masse (Lösemittel: Toluol mit einem Feststoffanteil von 40 %) wurde auf ein silikonisiertes Trennpapier beschichtet und in einem weiteren Transferschritt auf den ausgerüsteten Papierträger aufkaschiert.
SBBS 02 - Die Masse wurde in einem Hotmeltprozess in einem Extruder kompoundiert und über ein 3-Walzenauftragswerk auf den ausgerüsteten Träger beschichtet.
SBBS 03 - Die in Lösung hergestellte SBBS-Masse (Lösemittel: Toluol mit einem Feststoffanteil von 40 %) wurde direkt auf den ausgerüsteten Papierträger beschichtet, der dann anschließend im Ofen für 15 min bei 120 °C getrocknet wurde.

Die vergleichenden Untersuchungen wurden mit jeweils zwei im Handel erhältlichen Papierklebebändern auf Basis von Acrylat-Klebemassen (Acrylat 02, Acrylat 01) und Naturkautschuk-Klebemassen (NR 01, NR 02) durchgeführt.

| | |
|---|---|
| Acrylat 01 | Wettbewerbsmuster (3M 2080), Papierklebeband mit einer Klebemasse auf Acrylatbasis, |
| Acrylat 02 | tesa Produkt (tesa 4437), Papierklebeband mit einer Klebemasse auf Acrylatbasis; Klebemasseauftragsflächengewicht: 45 g/m² |
| NR 01 | tesa Produkt (tesa 4323), Papierklebeband mit einer Klebemasse auf Naturkautschukbasis; Klebemasseauftragsflächengewicht: 38 g/m² |
| NR 02 | tesa Produkt (tesa 4306), Papierklebeband mit einer Klebemasse auf Naturkautschukbasis; Klebemasseauftragsflächengewicht: 50 g/m² |

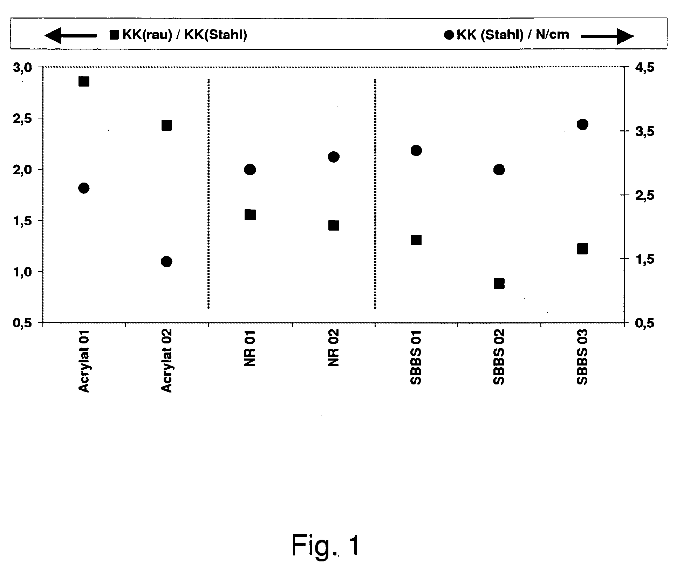

Die Abbildung 1 zeigt die Messergebnisse der Klebkraftmessungen, die an den unterschiedlichen Klebebändern jeweils auf Stahl und auf mikroskopisch rauen Untergründen durchgeführt wurden.

Die Kästchen (linke Skalierung) zeigen das Verhältnis aus der Klebkraft auf Stahl und der Klebkraft auf einem mit Sandpapier angeschliffenem Schwarzlackblech nach vier Tagen Klimalagerung bei 60 °C mit 90 % relativer Luftfeuchte. Die Punkte (rechte Skalierung) zeigen die Werte für die Klebkraft auf Stahl.
Deutlich zu erkennen ist der Sprung zwischen den Acrylat- und den NRbeziehungsweise SBBS-Klebemassen. Die Acrylat-Klebemassen kleben mit Klebkräften
< 3 N/cm (Punkte), ziehen aber nach einer Klimalagerung auf rauen Untergründen um einen Faktor > 2,5 (Kästchen) auf. Dagegen kleben die NR- und SBBS-Massen mit Klebkräften > 3 N/cm, ziehen nach der Klimalagerung aber nur mit einem Faktor kleiner 1,5 auf den Untergrund auf.

## Patentansprüche

1. Klebeband mit einem Träger aus einem Papier, auf den zumindest einseitig eine Klebemasse aufgebracht ist, wobei die Klebemasse besteht aus
mindestens einem Blockcopolymer P1 mit einem oder mehreren endständigen Blöcken bestehend aus Vinylaromaten und mindestens einem Block bestehend aus konjugierten Dienen, bei dem die endständigen Doppelbindungen, entstanden durch 1,2-Verknüpfung, zu mehr als 80 % hydriert sind, während die Doppelbindungen in der Hauptkette, entstanden durch 1,4-Verknüpfung, zu weniger als 30 % hydriert sind, und
mindestens einem Blockcopolymer P2 mit einem oder mehreren endständigen Blöcken bestehend aus Vinylaromaten und mindestens einem Block bestehend aus konjugierten Dienen, bei dem mindestens 95 % der Doppelbindungen hydriert sind.

2. Klebeband nach Anspruch 1,
**dadurch gekennzeichnet, dass**
es sich bei den Vinylaromaten um Styrol handelt

3. Klebeband nach Anspruch 1 oder 2,
**dadurch gekennzeichnet, dass**
die beiden Blockcopolymere P1 und P2 in einem Verhältnis von 25:75 bis zu 90:10 Gewichtsanteilen vorliegen, bevorzugt in einem Verhältnis von 40:60 bis zu 80:20 Gewichtsanteilen.

4. Klebeband nach zumindest einem der Ansprüche 1 bis 3,
**dadurch gekennzeichnet, dass**
es sich bei dem Blockcopolymer P1 um ein teilhydriertes Styrol-Butadien-Styrol-Blockcopolymer handelt.

5. Klebeband nach zumindest einem der vorherigen Ansprüche,
**dadurch gekennzeichnet, dass**
der Polyvinylaromatenanteil der Blockcopolymere P1 und P2 jeweils zwischen 10 und 35 Gew.-% liegt.

6. Klebeband nach zumindest einem der vorherigen Ansprüche,
**dadurch gekennzeichnet, dass**
der Anteil der beiden Vinylaromatenblockcopolymere in Summe bezogen auf die gesamte Klebmasse 20 bis 70 Gew.-%, bevorzugt 30 bis 60 Gew.-%, ganz besonders bevorzugt 35 bis 55 Gew.-% beträgt.

7. Klebeband nach zumindest einem der vorherigen Ansprüche,
**dadurch gekennzeichnet, dass**
die Klebmasse auch Zweiblockcopolymere enthält.

8. Klebeband nach zumindest einem der vorherigen Ansprüche,
**dadurch gekennzeichnet, dass**
die Klebmasse neben den Blockcopolymeren Klebharze enthält.

9. Klebmasse nach zumindest einem der vorherigen Ansprüche,
**dadurch gekennzeichnet, dass**
die Klebemasse zumindest ein UV-Schutzmittel und/oder weitere Abmischkomponenten enthält, insbesondere Weichmacher, Alterungsschutzmittel, Verarbeitungshilfsmittel, Füllstoffe, Farbstoffe, optische Aufheller, Stabilisatoren, Endblockverstärkerharze.

10. Klebeband nach zumindest einem der vorherigen Ansprüche,
**dadurch gekennzeichnet, dass**
der Papierträger mit einer Imprägnierung auf Basis eines carboxylgruppenhaltigen Acrylsäureestercopolymerisats ausgerüstet ist.

11. Klebeband nach zumindest einem der vorherigen Ansprüche,
**dadurch gekennzeichnet, dass**
der Papierträger mit einer Imprägnierung auf Basis eines carboxylgruppenhaltigen Styrol-Butadien-Copolymerisates ausgerüstet ist.

12. Klebeband nach zumindest einem der vorherigen Ansprüche,
**dadurch gekennzeichnet, dass**
das Papier des Papierträgers eine Reißdehnung zwischen 4 % und 60 %, vorteilhaft zwischen 6 % und 16 % aufweist.

13. Verwendung eines Klebebands nach zumindest einem der vorherigen Ansprüche als Abdeckklebeband in Lackierprozessen.

## Claims

1. Adhesive tape having a carrier comprising a paper to at least one side of which an adhesive is applied, the adhesive being composed of
at least one block copolymer P1 having one or more terminal blocks composed of vinylaromatics and having at least one block composed of conjugated dienes, wherein more than 80% of the terminal double bonds formed by 1,2-linkage are hydrogenated, while less than 30% of the double bonds in the main chain, formed by 1,4-linkage, are hydrogenated, and
at least one block copolymer P2 having one or more terminal blocks composed of vinylaromatics and having at least one block composed of conjugated dienes, wherein at least 95% of the double bonds are hydrogenated.

2. Adhesive tape according to Claim 1,
**characterized in that**
the vinylaromatics are styrene.

3. Adhesive tape according to Claim 1 or 2,
**characterized in that**
the two block copolymers P1 and P2 are present in a ratio of 25:75 up to 90:10 weight fractions, preferably in a ratio of 40:60 up to 80:20 weight fractions.

4. Adhesive tape according to at least one of Claims 1 to 3,
**characterized in that**
the block copolymer P1 is a partially hydrogenated styrene-butadiene-styrene block copolymer.

5. Adhesive tape according to at least one of the preceding claims,
**characterized in that**
the polyvinylaromatic fraction of the block copolymers P1 and P2 is in each case between 10% and 35% by weight.

6. Adhesive tape according to at least one of the preceding claims,
**characterized in that**
the fraction of the two vinylaromatic block copolymers in total, based on the overall adhesive, is 20% to 70%, preferably 30% to 60%, very preferably 35% to 55%, by weight.

7. Adhesive tape according to at least one of the preceding claims,
**characterized in that**
the adhesive also comprises diblock copolymers.

8. Adhesive tape according to at least one of the preceding claims,
**characterized in that**
the adhesive in addition to the block copolymers comprises tackifier resins.

9. Adhesive tape according to at least one of the preceding claims,
**characterized in that**
the adhesive comprises at least one UV protectant and/or other blending components, more particularly plasticizers, ageing inhibitors, processing assistants, fillers, dyes, optical brighteners, stabilizers, endblock reinforcer resins.

10. Adhesive tape according to at least one of the preceding claims,
**characterized in that**
the paper carrier is furnished with an impregnation based on a carboxyl group-containing acrylic ester copolymer.

11. Adhesive tape according to at least one of the preceding claims,
**characterized in that**
the paper carrier is furnished with an impregnation based on a carboxyl group-containing styrene-butadiene copolymer.

12. Adhesive tape according to at least one of the preceding claims,
**characterized in that**
the paper of the paper carrier has an elongation at break of between 4% and 60%, advantageously between 6% and 16%.

13. Use of an adhesive tape according to at least one of the preceding claims as adhesive masking tape in painting operations.

## Revendications

1. Bande adhésive comprenant un support en un papier, que lequel une masse adhésive est appliquée au moins d'un côté, la masse adhésive étant constituée par au moins un copolymère séquencé P1 comprenant une ou plusieurs séquences terminales constituées de composés vinylaromatiques et au moins une séquence constituée de diènes conjugués, dans lequel les doubles liaisons terminales, formées par liaison 1,2, sont hydrogénées à hauteur de plus de 80 %, tandis que les doubles liaisons dans la chaîne principale, formées par liaison 1,4, sont hydrogénées à hauteur de moins de 30 %, et au moins un copolymère séquencé P2 comprenant une ou plusieurs séquences terminales constituées de composés vinylaromatiques et au moins une séquence constituée de diènes conjugués, dans lequel au moins 95 % des doubles liaisons sont hydrogénées.

2. Bande adhésive selon la revendication 1, **caractérisée en ce que** les composés vinylaromatiques sont du styrène.

3. Bande adhésive selon la revendication 1 ou 2, **caractérisée en ce que** les deux copolymères séquencés P1 et P2 sont présents en un rapport de 25:75 à 90:10 parties en poids, de préférence en un rapport de 40:60 à 80:20 parties en poids.

4. Bande adhésive selon au moins l'une quelconque des revendications 1 à 3, **caractérisée en ce que** le copolymère séquencé P1 est un copolymère séquencé de styrène-butadiène-styrène partiellement hydrogéné.

5. Bande adhésive selon au moins l'une quelconque des revendications précédentes, **caractérisée en ce que** la proportion de composés polyvinylaromatiques des copolymères séquencés P1 et P2 est respectivement comprise entre 10 et 35 % en poids.

6. Bande adhésive selon au moins l'une quelconque des revendications précédentes, **caractérisée en ce que** la proportion des deux copolymères séquencés de composés vinylaromatiques au total par rapport à la masse adhésive totale est de 20 à 70 % en poids, de préférence de 30 à 60 % en poids, de manière tout particulièrement préférée de 35 à 55 % en poids.

7. Bande adhésive selon au moins l'une quelconque des revendications précédentes, **caractérisée en ce que** la masse adhésive contient également des copolymères biséquencés.

8. Bande adhésive selon au moins l'une quelconque des revendications précédentes, **caractérisée en ce que** la masse adhésive contient des résines adhésives en plus des copolymères séquencés.

9. Bande adhésive selon au moins l'une quelconque des revendications précédentes, **caractérisée en ce que** la masse adhésive contient au moins un agent protecteur anti-UV et/ou d'autres composants de mélange, notamment des plastifiants, des agents antivieillissement, des adjuvants d'usinage, des charges, des colorants, des azurants optiques, des stabilisateurs, des résines de renforcement des séquences terminales.

10. Bande adhésive selon au moins l'une quelconque des revendications précédentes, **caractérisée en ce que** le support en papier est muni d'une imprégnation à base d'un copolymère d'ester de l'acide acrylique contenant des groupes carboxyle.

11. Bande adhésive selon au moins l'une quelconque des revendications précédentes, **caractérisée en ce que** le support en papier est muni d'une imprégnation à base d'un copolymère de styrène-butadiène contenant des groupes carboxyle.

12. Bande adhésive selon au moins l'une quelconque des revendications précédentes, **caractérisée en ce que** le papier du support en papier présente un allongement à la rupture compris entre 4 % et 60 %, avantageusement entre 6 % et 16 %.

13. Utilisation d'une bande adhésive selon au moins l'une quelconque des revendications précédentes en tant que bande adhésive de recouvrement dans des procédés de vernissage.
